# EUROPEAN PATENT APPLICATION

(11) **EP 4 683 358 A1**
(43) Date of publication of application: **21.01.2026**
(21) Application number: 24211541.8
(22) Date of filing: 07.11.2024
(51) Int. Cl.: H04W 8/18, H04W 60/00, H04W 88/06

(54) **SYSTEM AND METHOD FOR PEER SIM BASED OPTIMIZATION DURING NAS FAILURES AND NETWORK SELECTION**

(30) Priority: 19.07.2024 IN 202441055369
(71) Applicant: Samsung Electronics Co., Ltd., Suwon-si, Gyeonggi-do 16677 (KR)
(72) Inventor: GANIG, Chetan Ramesh, 560048 Bengaluru (IN); MANDAL, Sameer Kumar, 560048 Bengaluru (IN); DANDRA, Prasad Basavaraj, 560048 Bengaluru (IN); KARAIKAL VEERAPURA MANIKYAMMANAVARA, Shreedhar, 560048 Bengaluru (IN); TENSINGH, Shrinithi Andal, 560048 Bengaluru (IN)
(74) Representative: Marks & Clerk LLP

(57) **Abstract**

Disclosed herein is a method for network registration in a multi-Subscriber Identity Module (SIM) User Equipment (UE), the multi-SIM UE including a first SIM and at least one second SIM, the first SIM and the at least one second SIM being connected to a common network, and the method including sending network registration information to a first stack associated with the first SIM by at least one second stack associated with the at least one second SIM, and adapting, by the first stack, a network registration using the network registration information.

## Description

### TECHNICAL FIELD

Embodiments disclosed herein relate to wireless communication networks, and more particularly to methods and systems for peer sim-based optimization during Network Access Stratum (NAS) failures and network selection.

### BACKGROUND

In the current scenario, wireless devices are capable of handling multiple Subscriber Identity Modules (SIMs). While operating the multiple SIMs independently, wireless devices perform the same set of procedures (or similar sets of procedures) on both SIMs which leads to an increase in recovery time from failures which further leads to an increase in service interruption. In a non-limiting example, procedures such as initial and mobility registration updates, optional network selection post-registration failure, network scan, and out-of-service (OOS) recovery may be affected.

A multi-sim user equipment (UE) (wireless device supporting multiple SIMs) includes two or more removable universal integrated circuit cards (UICCs), each UICC is capable of communicating with one or more baseband processors, on which two or more wireless cellular protocol software stacks operate. Each wireless cellular protocol software stack communicates with a respective wireless network. Different wireless cellular protocol software stacks (for example, stack 1 and stack 2) may refer to different instances of similar protocol stacks. When two or more SIMs of the multi-sim UE connect to the same wireless network (or similar wireless networks), both wireless cellular protocol software stacks may receive the same network-specific reject causes (or similar network-specific reject causes) during network level failure. Additionally, external factors affecting the connectivity of the wireless communication device are common to both the wireless cellular protocol software stacks. These external factors include no-man land, bad weather, shielded areas like basements or elevators, or other external factors.

Further, a user opts for the multi-sim UE for various reasons that include maintaining separate contact lists for personal and business purposes, segregating data services from voice calls, and managing postpaid and prepaid connections.

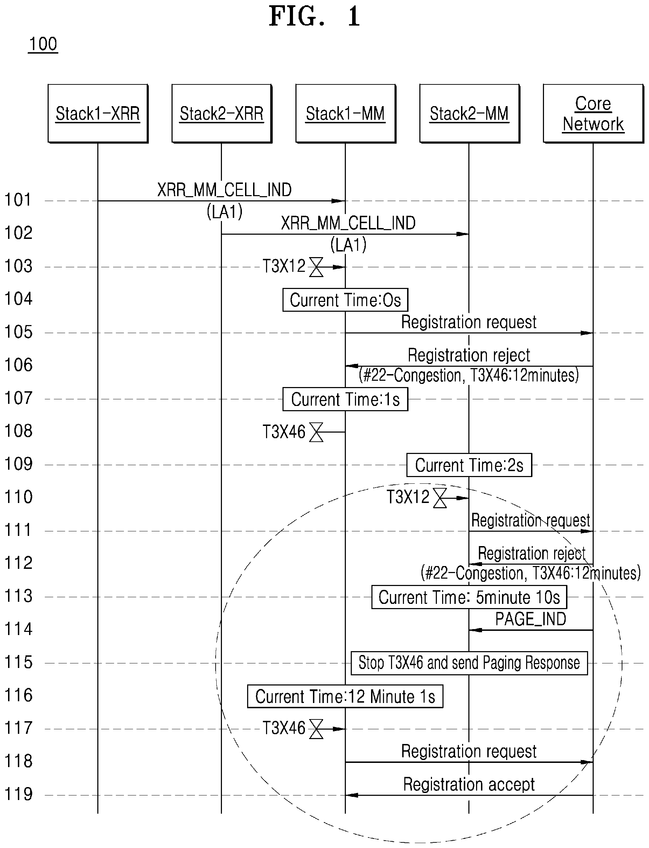

In wireless devices such as the multi-sim UE, the simultaneous (or contemporaneous) use of multiple SIM cards creates several challenges. FIG. 1 illustrates a line diagram 100 for a first challenge scenario in the multi-sim UE when a network registration has failed due to network congestion, according to an existing technique.

Currently, the multi-sim UE lacks a mechanism for sharing mobility management level information across the software stacks. As a result, each software stack repeats the same procedure (or similar procedure) when multiple software stacks encounter similar conditions. This repetition leads to an increase in recovery time from no service and service interruption.

As shown in FIG. 1, a SIM is inserted for each software stack (stack 1-Mobility Management 1 (MM) and stack2-MM) in the multi-sim UE. Both the software stacks are camped on the same cell within the same Public Land Mobile Network (PLMN). If the network experiences congestion, for example, no channel, facility busy/congested, etc., the registration is rejected on both stack1-MM and stack2-MM due to congestion (with cause 22 - congestion) with a back off timer value. Thereafter, both stack1-MM and stack2-MM start a back off timer. During this period, neither stack attempts to connect to the network except for emergency services. After the congestion clears at network side, the network pages the stack2-MM for pending user data in downlink direction, and the stack2-MM successfully connects to the network. However, the stack1-MM continues to run its back off timer even though the network is available. Therefore, the prolonged back off timer at the stack1-MM leads to service interruption for a longer time on the stack1-MM.

Referring to the specific operations in FIG. 1, initially, an indication from the Radio Resource management layer specifying the Cell identifier (ID) and related information about the cell in which the UE has camped on will be sent to the Mobility Management layer (MM). In general, the Radio Resource management layer common to all Access Technologies is mentioned here as XRR. At operation 101, stack1-MM may receive an XRR_MM_CELL_IND (LA1) message from stack1-XRR, and at operation 102, stack2-MM may receive an XRR_MM_CELL_IND (LA1) message from stack2-XRR. At operations 103-104, a timer T3X12 is expired at stack 1-MM, and current time (time elapsed since start of the procedure) is 0 seconds.

At operation 105, a registration request may be sent by the stack1-MM to the core network. In case of congestion in the network, the core network may send a registration reject response (cause #22) to the stack1-MM, as depicted at operation 106. At operations 107-108, upon receiving the registration reject message, the stack1-MM starts a first back-off timer of the first back-off timer duration. At operations 109-110, timer T3X12 may have expired on the stack2-MM. At operation 111, the registration request may be sent by the stack2-MM to the network. In case of congestion in the network, the network may send a registration reject response to the stack2-MM, as depicted at operation 112. In an example, the network sends a second back-off timer duration along with the registration reject message to the stack2-MM. Upon receiving the registration reject message, the stack2-MM starts a second back-off timer of the second back-off timer duration.

As depicted at operation 113, the current time (time elapsed since start of procedure) is around 5 minutes, 10 seconds. At operation 114, the stack2-MM may receive a paging message from the network indicating the clearance of the network congestion. At operation 115, the stack2-MM sends a paging response to the network. At operations 116-117, when the current time is around 12 minutes, the back-off timer at the stack1-MM expires. At operations 118-119, the stack1-MM may attempt the network registration upon expiry of the first back-off timer, and successfully registers with the network after receiving a registration accept message from the network, however, there is prolonged delay at stack1-MM due to the corresponding back off timer running. At operations 116 and 117, the stack1-MM continues to run its back off timer even though the network is available. Therefore, the prolonged back off timer at the stack1-MM leads to service interruption for a longer time on the stack1-MM.

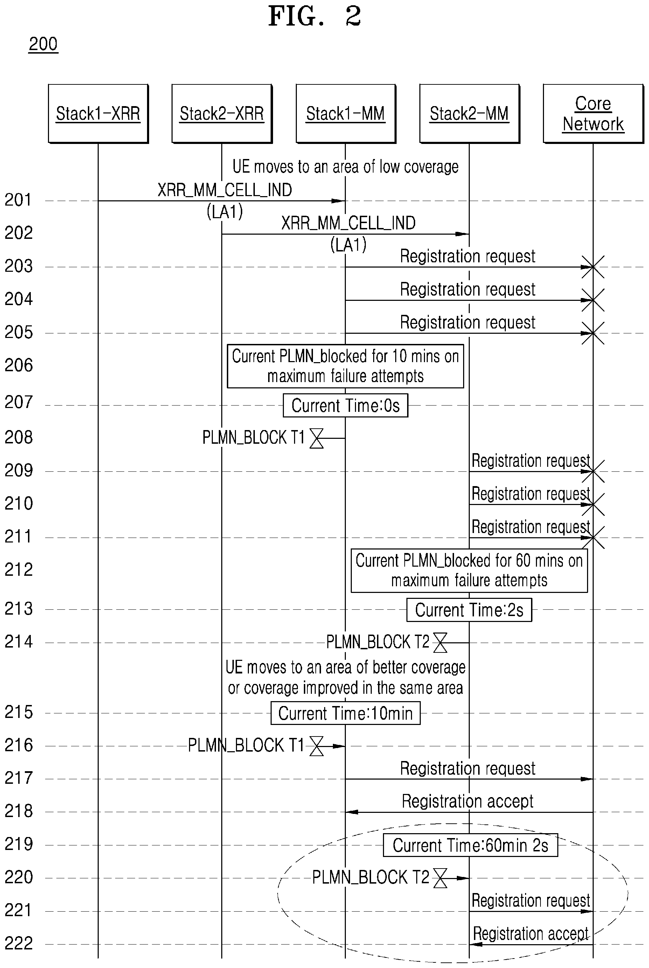

FIG. 2 illustrates a line diagram 200 for a second challenge scenario in the multi-sim UE when the network registration failed due to transmission failure, according to an existing technique.

As shown in FIG. 2, the SIM is inserted for each software stack (stack1-MM and stack2-MM) in the multi-sim UE. Both the software stacks are camped on the same cell within the same PLMN. In a case when the multi-sim UE moves to a region with lower network coverage, mobility registration fails due to lower layer failures. After a predefined (or alternatively, given) maximum (or upper limit) number of failed attempts, the current PLMN becomes blocked (or limited), and recovery timers (Timer T1 and Timer T2 where T1 < T2) are started in both software stacks. Thereafter, when the multi-sim UE moves to an area with better network coverage, the PLMN remains blocked (or limited) until the recovery timer expires. When the Timer T1 expires, the stack 1-MM successfully performs registration. However, the stack2-MM continues to run its recovery timer even though the network coverage conditions have improved. Therefore, the prolonged recovery timer at the stack2-MM leads to PLMN blocking (or limiting) for a longer time in the stack2-MM. This situation leads to prolonged service interruptions at the stack2-MM.

Referring to the specific operations in FIG. 2, initially, an indication from the Radio Resource management layer specifying the Cell ID and related information about the cell in which the UE has camped on will be sent to the Mobility Management layer (MM). In general, the Radio Resource management layer common to all Access Technologies is mentioned here as XRR. At operation 201, the stack1-MM may receive the XRR_MM_CELL_IND (LA1) message from the stack1-XRR, and at operation 202, the stack2-MM may receive the XRR_MM_CELL_IND (LA1) message from the stack2-XRR. At operations 203-205, the stack1-MM attempts network registration with network, however, since the UE is in low network coverage area, the attempts of the stack1-MM are failed due to lower layer failures. When a predefined (or alternatively, given) number of attempts are failed, the stack1-MM starts a first timer of a first time duration. The first timer corresponds to the first recovery timer and the first time duration to the duration T1 of the first recovery timer associated with the stack1-MM. At operations 206-208, upon starting the first timer, the network is blocked (or limited) for the stack1-MM for the first time duration. In an example the first duration may be 10 minutes. At operations 209-211, the stack2-MM attempts network registration with network, however, the attempts are failed due to the lower layer failures. When a predefined (or alternatively, given) number of attempts are failed, the stack2-MM starts a second timer of a second time duration. The second timer corresponds to the second recovery timer and the second time duration corresponds to the duration T2 of the second recovery timer associated with the stack2-MM. At operations 212-214, upon starting the second timer, the network is blocked (or limited) for the stack2-MM for the second time duration. In an example the second duration may be 60 minutes. Therefore, the network is blocked (or limited) for 60 minutes after maximum (or upper limit) number of failed attempts.

In an example, after operation 214, the current time (time elapsed since start of procedure) is 10 minutes, and the UE may move to an improved network coverage area from the lower network coverage area. At operations 215-217, upon expiration of the first timer (after 10 minute), the stack1-MM may again attempt the network registration with the network by sending a registration request. Thereafter, the stack1-MM may receive a network registration accept message, as depicted at operation 218. At operations 219-221, after expiration of the second timer, for example, after the expiry of 60 minutes timer, the stack2-MM may again attempt the network registration with the network by sending the registration request. Thereafter, the stack2-MM may receive the network registration accept message, as depicted at operation 222. Here, the stack2-MM continues to run its recovery timer even though the network coverage conditions have improved. Therefore, the prolonged recovery timer at the stack2-MM leads to PLMN blocking (or limiting) for a longer time in the stack2-MM. This situation leads to prolonged service interruptions at the stack2-MM.

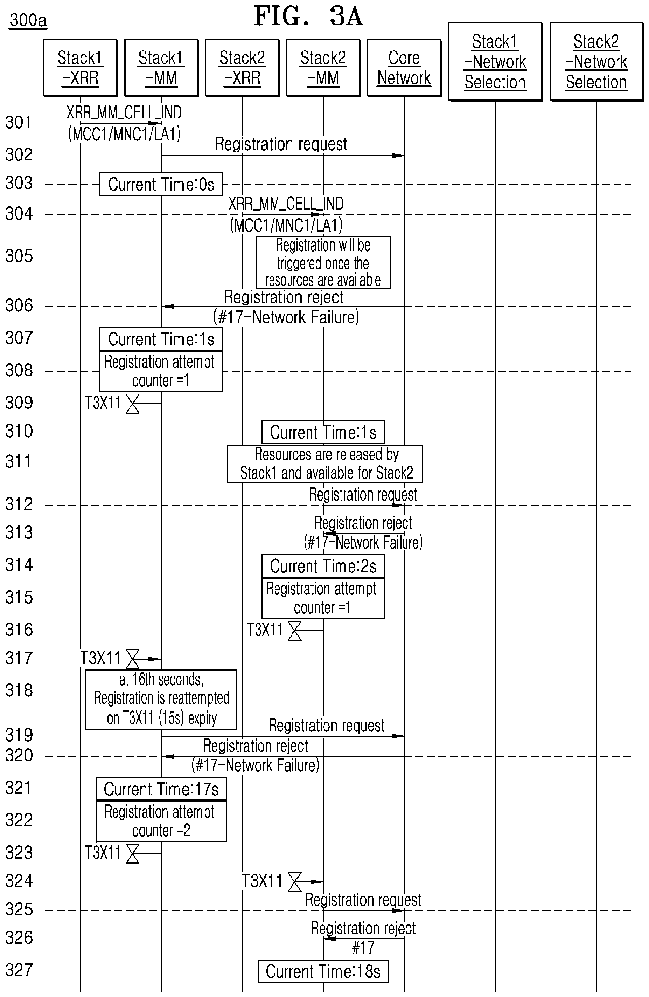

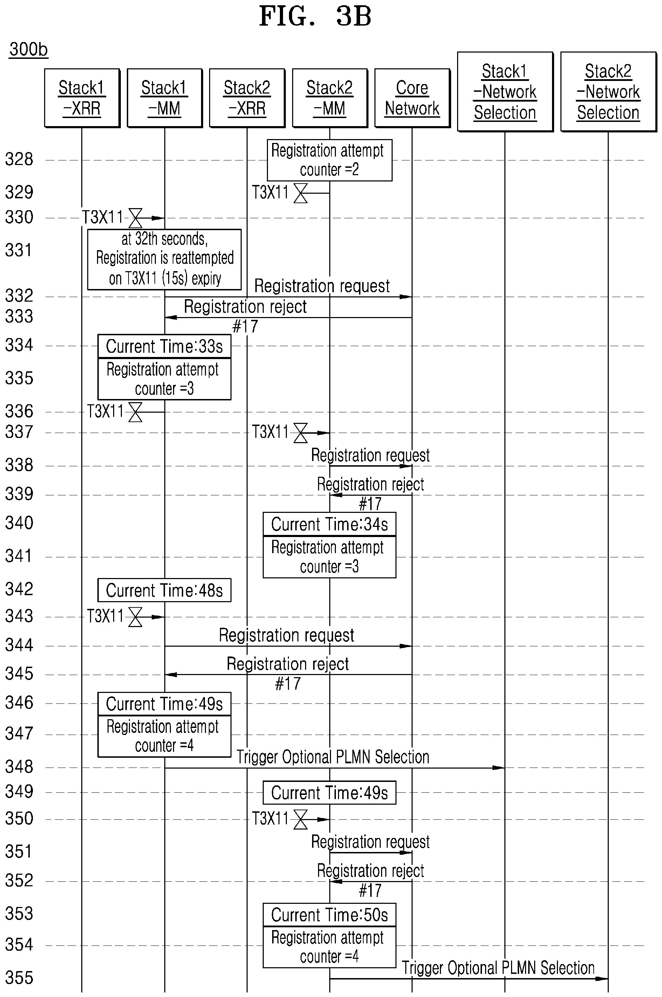

FIGS. 3A-3C illustrate line diagrams 300a, 300b, and 300c for a third challenge scenario in the multi-sim UE when the network registration failed due to network failure, according to existing techniques.

As shown in FIGS. 3A-3C, the SIM is inserted for each software stack (stack 1-MM and stack2-MM) in the multi-sim UE. Both the software stacks are camped on the same cell within the same Public Land Mobile Network (PLMN). In this scenario, the PLMN is temporarily unavailable. When registration requests are sent from both stack1-MM and stack2-MM, the PLMN rejects them with cause #17 (Network Failure). Here, mobility management component of both stack1-MM and stack2-MM retries registration up to a predefined (or alternatively, given) number of maximum (or upper limit) attempts on receiving cause #17 (Network Failure). For example, the Location Area Update (LAU) procedure may be retried up to 4 times, while General Packet Radio Service (GPRS) attach, Routing Area Update (RAU), Evolved Packet System (EPS) Attach, and Registration Update may be retried up to 5 attempts. Therefore, the UE takes more time to start recovery from network failures. Additionally, both stack1-MM and stack2-MM perform recovery scans independently one after the other, which further adds more time to get both stack1-MM and stack2-MM back in service. This issue impacts service reliability and efficiency.

Referring to the specific operations in FIGS. 3A-3B, initially, an indication from the Radio Resource management layer specifying the Cell ID and related information about the cell in which the UE has camped on will be sent to the Mobility Management layer (MM). In general, the Radio Resource management layer common to all Access Technologies is mentioned here as XRR. At operation 301, the stack1-MM may receive the XRR_MM_CELL_IND (LA1) message from the stack 1-XRR. At operation 302, the stack1-MM may send the network registration request to the network (core network). At operation 303, the current time (time elapsed since start of procedure) is 0 seconds and at operation 304, the stack2-MM may receive the XRR_MM_CELL_IND (LA1) message from the stack2-XRR. As depicted at operation 305, the network registration may be triggered. At operation 306, the stack1-MM may receive the network registration reject message from the network. The network registration reject message, in the present scenario, may indicate a failure in the network, e.g., cause #17.

Upon receiving the network registration reject message indicating failure in network, the stack1-MM may update a registration attempt counter, as depicted at operation 308. For example, the registration attempt counter may be set to 1. At operation 309, the stack1-MM may start a first retry timer of a predefined (or alternatively, given) time duration. According to examples disclosed herein, the first timer may correspond to the timer set for retrying registration procedure. At operations 310-312, the stack2-MM attempts network registration, and at operation 313, the stack2-MM receives the network registration reject message from the network. At operations 314-315, the stack2-MM updates a registration attempt counter. For example, the registration attempt counter may be set to 1.

At operation 316, the stack2-MM may start a second retry timer of the predefined (or alternatively, given) time duration. According to examples disclosed herein, the second timer may correspond to the timer set for retrying registration procedure. At operation 317, the first retry timer may expire. At operations 318-319, the stack1-MM may attempt the network registration upon expiry of first timer. At operation 320, the stack1-MM may receive the network registration reject message from the network with cause #17. At operations 321-322, the stack1-MM may increment the first registration attempt counter. For example, the first registration attempt counter may be incremented from 1 to 2 in response to the registration failure at the stack1-MM at operation 320. At operation 323, the stack1-MM may restart the first timer.

At operation 324, the second retry timer may expire. At operations 325-329, operations similar to the operations 312-316 are performed such that the second registration attempt counter may be incremented from 1 to 2 in response to the registration failure at the stack2-MM at operation 326. At operations 330- 341, operations similar to operations 317-328 are performed. Further, at operations 342-347, operations similar to operations 321-323 are performed. At operation 347, the first registration attempt counter may be incremented from 3 to 4 (a predefined or alternatively, given threshold) in response to the registration failure at the stack1-MM at operation 345. The current time is around 49 seconds. At operation 348, the stack1-MM triggers the Optional PLMN selection after reaching the predefined (or alternatively, given) threshold in the registration attempts. At operation 439, the time is 49s. At operations 350-354, operations similar to operations 337-341 are performed. At operation 354 the second registration attempt counter may be incremented from 3 to 4 (a predefined or alternatively, given threshold) in response to the registration failure at the stack2-MM at operation 352. At operation 355, the stack2-MM triggers the Optional PLMN Selection after reaching the predefined (or alternatively, given) threshold in the registration attempts.

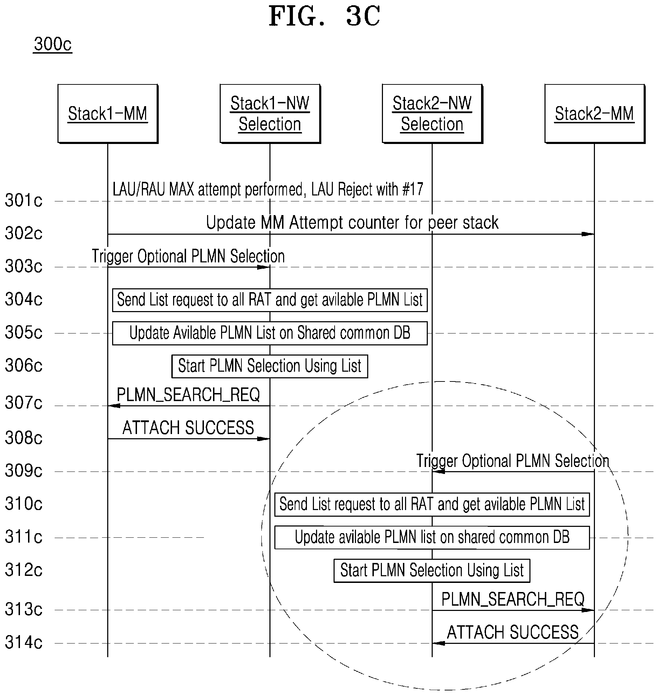

Referring to FIG. 3C, at operation 301c, a Location Area Update (LAU) reject message may be received at the stack1-MM. The LAU reject message may be indicative of cause #17. Further, maximum (or highest limit) LAU or Routing Area Update (RAU), EPS Attach, and Registration Update attempts may be performed. At operation 302c, the stack1-MM requests the stack2-MM to update an MM attempt counter. Further, at operation 303c, the stack1-MM may trigger the optional PLMN selection by sending a request to stack1-network selection. At operation 304c, the stack1-network selection sends a list request to all Radio Access Technologies (RAT) and obtains available PLMN list. At operation 305c, the stack1-network selection updates the available PLMN list on a shared common database. The "Shared common database" is the database storing information, which can be accessed by all the stacks (Stack1 and Stack2) simultaneously. This shared common database is stored in the volatile memory of the device. At operation 306c, the stack1-network selection starts PLMN selection using the list of available PLMNs. At operation 307c, the stack1-network selection may start a PLMN search from available PLMNs and at operation 308c, the stack1-MM successfully registers to the stack1-network selection. Further, at operation 309c, optional PLMN selection is triggered at the stack2-MM. At operations 3 10c-314c, operations similar to the operations 304c-308c are performed by the stack2-MM and stack2-network selection.

Here, the UE takes more time to start recovery from network failures. Additionally, both stack1-MM and stack2-MM perform recovery scans independently one after the other, which further adds more time to get both stack1-MM and stack2-MM back in service. This issue impacts service reliability and efficiency.

### SUMMARY

This summary is provided to introduce a selection of concepts, in a simplified format, that are further described in the detailed description of the disclosure. This summary is neither intended to identify key or essential inventive concepts nor is it intended to determine the scope of the disclosure. Embodiments provide a method that overcomes the above-discussed challenges of the multi-sim UE and optimize (or improve) network registration in the multi-sim UE.

Disclosed herein is a method for network registration in a multi-Subscriber Identity Module (SIM) User Equipment (UE), the multi-SIM UE including a first SIM and at least one second SIM, the first SIM and the at least one second SIM being connected to a common network, and the method including sending network registration information to a first stack associated with the first SIM by at least one second stack associated with the at least one second SIM, and adapting, by the first stack, a network registration using the network registration information.

In some embodiments, the network registration information includes at least one of registration reject information, an available network selection list, or registration success information.

In some embodiments, the method comprises receiving, by the first stack, a first network registration reject message with a first back-off timer duration from the network, the first network registration reject message indicating congestion in the network; in response to the network registration reject message, starting, by the first stack, a first back-off timer of the first back-off timer duration; receiving, by the at least one second stack, a second network registration reject message with a second back-off timer duration from the network, starting, by the at least one second stack, a second back-off timer of the second back-off timer duration; receiving, by the at least one second stack, a paging message from the network indicating that the congestion is cleared at the network; and sending, by the at least one second stack to the first stack, an indication of an availability of the network as the network registration information.

Also disclosed herein is a multi-Subscriber Identity Module (SIM) User Equipment (UE) including a first stack associated with a first SIM, at least one second stack associated with at least one second SIM, and processing circuitry configured to control the first stack and the at least one second stack to send, using the at least one second stack, network registration information to the first stack, the first SIM and the at least one second SIM being connected to a common network, and adapt, using the first stack, a network registration using the network registration information. The processing circuitry is further configured to optimize (or improve), using the first stack, network registration using the network registration information shared by at least one second SIM to acquire network services from the network at the earliest (and vice versa).

According to an aspect, there is provided an multi-Subscriber Identity Module (SIM) User Equipment (UE), comprising: processing circuity configured to provide: a first stack associated with a first SIM and at least one second stack associated with at least one second SIM; and configured to control the first stack and the at least one second stack to: send, using the at least one second stack, network registration information to the first stack, the first SIM and the at least one second SIM being connected to a common network, and adapt, using the first stack, a network registration using the network registration information.

To further clarify the advantages and features of the present disclosure, a more particular description of the disclosure will be rendered by reference to specific examples thereof, which is illustrated in the appended drawing. It is appreciated that these drawings depict embodiments of the disclosure and are not to be considered limiting the scope of embodiments. The disclosure will be described and explained with additional specificity and detail with the accompanying drawings.

At least some of the above and other features of the invention are set out in the claims.

### BRIEF DESCRIPTION OF FIGURES

These and other features, aspects, and advantages of the present disclosure will be understood better when the following detailed description is read with reference to the accompanying drawings in which like characters represent like parts throughout the drawings, wherein:
FIG. 1 illustrates a line diagram for a first challenge scenario in the multi-sim UE when a network registration has failed due to network congestion, according to an existing technique;
FIG. 2 illustrates a line diagram for a second challenge scenario in the multi-sim UE when the network registration failed due to lower layer failures, according to an existing technique;
FIGS. 3A-3C illustrate line diagrams for a third challenge scenario in the multi-sim UE when the network registration failed due to network failure, according to existing techniques;
FIG. 4 illustrates a block diagram of a communication environment depicting a configuration of a multi-SIM user equipment (UE) in communication with a core network, in accordance with embodiments of the present disclosure;
FIG. 5 illustrates a process associated with the solution-1 for optimizing (or improving) the network registration, in accordance with embodiments of the present disclosure;
FIG. 6 illustrates a process associated with the solution-2 for optimizing (or improving) the network registration, in accordance with embodiments of the present disclosure;
FIGS. 7A-7B illustrate a process associated with the solution-3A for optimizing (or improving) the network registration, in accordance with embodiments of the present disclosure;
FIGS. 8A-8B illustrate a process associated with the solution-3B for optimizing (or improving) the network registration, in accordance with embodiments of the present disclosure;
FIG. 9 illustrates yet another process for optimizing (or improving) the network registration, in accordance with embodiments of the present disclosure; and
FIG. 10 illustrates flow chart depicting a method to optimize (or improve) network registration in a multi-sim UE where a first Subscriber Identity Module (SIM) and at least one second SIM of the multi-sim UE are connected to a same network (or similar networks), in accordance with embodiments of the present disclosure.

### DETAILED DESCRIPTION

For the purpose of promoting an understanding of the principles of the disclosure, reference will now be made to embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

The term "some" or "one or more" as used herein is defined as "one", "more than one", or "all." Accordingly, the terms "more than one," "one or more" or "all" would all fall under the definition of "some" or "one or more". The terms "an embodiment", "another embodiment", "some embodiments", or "in one or more embodiments" may refer to one embodiment, several embodiments, or all embodiments. Accordingly, the term "embodiments" is defined as meaning "one embodiment, or more than one embodiment, or all embodiments."

The terminology and structure employed herein are for describing, teaching, and illuminating embodiments and their specific features and elements and do not limit, restrict, or reduce the scope of the claims or their equivalents. The phrase "exemplary" may refer to an example.

More specifically, any terms used herein such as but not limited to "includes," "comprises," "consisting," "has," and "have" and grammatical variants thereof do not specify an exact limitation or restriction and certainly do not exclude the possible addition of one or more features or elements, unless otherwise stated, and must (or should) not be taken to exclude the possible removal of one or more of the listed features and elements unless otherwise stated with the limiting language "mush comprise" or "needs to include".

Whether or not a certain feature or element was limited to being used only once, either way, it may still be referred to as "one or more features", "one or more elements", "at least one feature", or "at least one element." Furthermore, the use of the terms "one or more" or "at least one" feature or element does not preclude there being none of that feature or element unless otherwise specified by limiting language such as "there needs to be one or more" or "one or more element is required."

Unless otherwise defined, all terms, and especially any technical and/or scientific terms, used herein may be taken to have the same meaning as (or a similar meaning to) that commonly understood by one having ordinary skill in the art.

Embodiments of the present disclosure will be described below in detail with reference to the accompanying drawings.

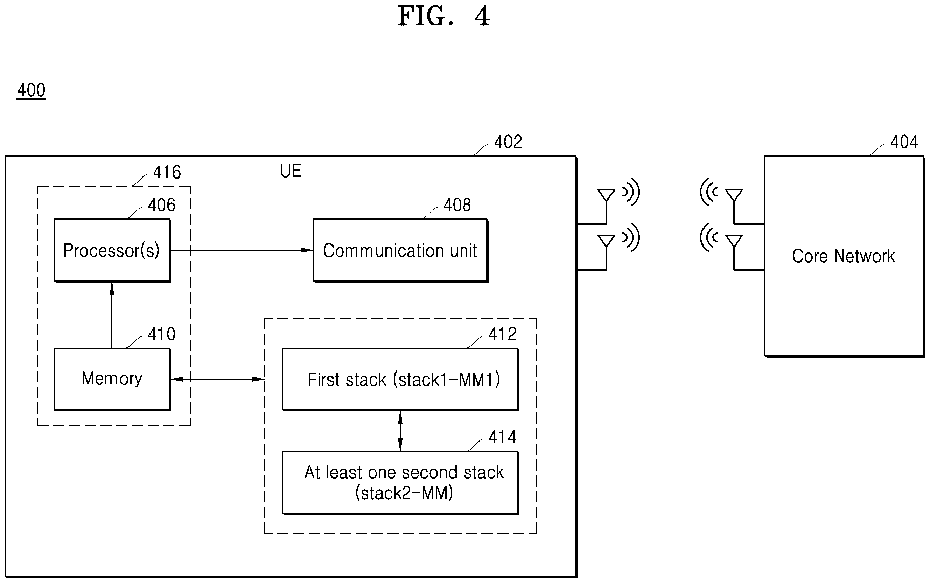

FIG. 4 illustrates an example block diagram of a communication environment 400 depicting a configuration of a user equipment (UE) 402 associated with a core network 404 (also referred to herein as the network 404), according to embodiments disclosed herein. The configuration as disclosed in FIG. 4 may be understood as parts of the configuration of the user equipment 402. Hereinafter, it is understood that terms including "unit" or "module" at the end may refer to the unit for processing at least one function or operation and may be implemented in hardware, or a combination of hardware and software.

Referring to FIG. 4, the UE 402 may correspond to a multi-sim user-equipment (multi-SIM UE) where a first Subscriber Identity Module (SIM) and at least one second SIM of the multi-sim UE are associated with a same network (or similar networks), such as the core network 404. The term `multi-sim user-equipment' may be used interchangeably with 'UE', or `multi-sim UE' throughout the specification.

The UE 402 may include one or more processor(s) 406 (also, referred to as processor 406), a communication unit 408 (e.g., communicator or communication interface), and/or a storage unit (e.g., memory 410). The communication unit 408 may perform functions for transmitting and/or receiving signals.

As an example, the processor 406 may be a single processing unit or a number of units, all of which could include multiple computing units. The processor 406 may be implemented as one or more microprocessors, microcomputers, microcontrollers, digital signal processors, central processing units, state machines, logic circuitries, and/or any devices that manipulate signals based on operational instructions. Among other capabilities, the processor 406 is configured to fetch and execute computer-readable instructions and data stored in the memory 410. The processor 406 may include one or a plurality of processors. At this time, one or a plurality of processors 406 may be a general-purpose processor, such as a central processing unit (CPU), an application processor (AP), or the like, and an AI-dedicated processor such as a neural processing unit (NPU). The processor 406 may control the processing of input data in accordance with a predefined (or alternatively, given) operating rule or artificial intelligence (AI) model stored in the non-volatile memory and the volatile memory, e.g., the memory 410. The predefined (or alternatively, given) operating rule or artificial intelligence model is provided through training or learning.

The UE 402 may include a plurality of stacks such that each of the plurality of stacks is associated with a corresponding SIM of the multiple SIMs supported by the UE. In embodiments, the UE 402 may include a first stack 412 (stack1-MM) and at least one second stack 414 (stack2-MM). In embodiments, the first stack is a wireless cellular protocol software stack associated with the first SIM, and the at least one second stack is the wireless cellular protocol software stack associated with the at least one second SIM. According to embodiments of the present disclosures, the first stack and the at least one second stack are 'peer' stacks to each other. That is, the first stack 412 is the `peer stack' to the at least one second stack 414 and the at least one second stack 414 is `peer stack' to the first stack 412. The first stack 412 and second stack 414 may be provided by processing circuitry (e.g. a baseband processor) of the UE 402.

The memory 410 may include any non-transitory computer-readable medium known in the art including, for example, volatile memory, such as static random-access memory (SRAM) and dynamic random-access memory (DRAM), and/or non-volatile memory, such as read-only memory (ROM), erasable programmable ROM, flash memories, hard disks, optical disks, and magnetic tapes.

In embodiments, the user equipment 402 may be associated with a system 416 comprising at least the processor 406 and the memory 410. The memory 410 may include executable instructions that, when executed by the processor 406, cause the system to perform the functions and operations as described hereinafter in the present disclosure. Further, the system 416 may be in communication with the core network 404 to perform the functions and operations as described hereinafter in the present disclosure.

In embodiments, the core network 404 may be implemented as dedicated hardware units. In embodiments, the core network 404 may be implemented in the form of virtualized software units in hardware or cloud environments.

The method disclosed herein provides various technical advantages and benefits such as ensuring sharing information about NAS registration information and network selection list to peer stack so that peer stack may decide to skip (or may skip) attempting registration and start recovery action at earliest, thereby optimizing (or improving) the network registration in the multi-sim UE. As described above, the first stack 412 is the `peer stack' to the at least one second stack 414 and the at least one second stack 414 is `peer stack' to the first stack 412.

In embodiments, the UE 402 may be configured to send network registration information and a network selection list to the first stack 412 associated with the first SIM by the at least one second stack 414 associated with the at least one second SIM. According to embodiments of the present disclosure, the network registration information includes at least one of registration reject information and/or registration success information. In embodiments, the registration reject information indicates a registration failure of the network at one of the first stack or the second stack. In embodiments, the registration reject information includes back-off timer information and reject cause information. The back-off timer information indicates a back-off timer value, and the reject cause information indicates one of a network congestion, a network failure, or a registration failure of the network at one of the first stack or the at least one second stack. According to embodiments of the present disclosure, the registration success information indicates that the network is available.

As described above, in the first challenge scenario corresponding to FIG. 1, the UE 402 does not consider sharing mobility management level information such as network registration information across peer stacks. Therefore, when multiple stacks are impacted by similar network conditions such as no service or service interruption, each individual stack may follow the same procedure (or similar procedures). Such a scenario may increase the recovery time from the network conditions.

According to embodiments of the present disclosure, to address the above-described challenge scenario, the UE, in embodiments (hereinafter, referred to as ' solution-1'), may be configured to receive, via the first stack, a network registration reject message with a first back-off timer duration from the network 404. In embodiments, the network registration reject message indicates a congestion in the network. Upon receiving the network registration reject message, the UE may be configured to start, via the first stack 412, a first back-off timer of the first back-off timer duration. Further, the UE 402, may be configured to receive, via the at least one second stack 414, the network registration reject message with a second back-off timer duration from the network. Upon receiving the network registration reject message, the UE may be configured to start, via the at least one second stack 414, a second back-off timer of the second back-off timer duration.

In embodiments, the UE 402 may be configured to receive, via the at least one second stack 414, a paging message from the network when the congestion is cleared at the network and user or signalling data is pending from network. Upon receiving the paging message from the network 404, the UE 402 may be configured to send the network registration information indicating an availability of the network to the first stack 412 via the at least one second stack 414.

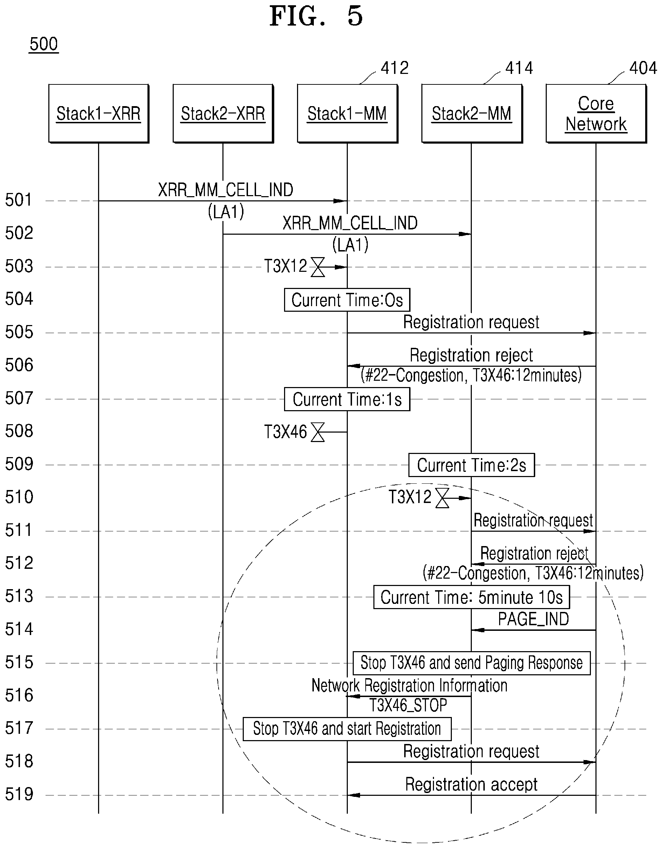

In embodiments, in response to receiving the indication associated with the availability of the network, the UE 402 may be configured to terminate, via the first stack 412, the first back-off timer. Further, the UE 402, via the first stack 412, may be configured to attempt the network registration upon terminating the first back-off timer. The flow of operation, within the UE 402, associated with the solution-1, is described in below in conjunction with FIG. 5.

FIG. 5 illustrates a process 500 associated with the solution-1 for optimizing (or improving) the network registration, according to embodiments disclosed herein. The process 500 is implemented by the UE 402 via the first stack (stack 1-MM) 412, and the at least one second stack (stack 2-MM) 414 to perform optimized (or improved) network registration in case of congestion in the network.

Initially, an indication from the Radio Resource management layer specifying the Cell ID and related information about the cell in which the UE 402 has camped on will be sent to the Mobility Management layer (MM). In general, the Radio Resource management layer common to all Access Technologies is mentioned here as XRR. At operation 501, the first stack 412 (stack1-MM) may receive XRR_MM_CELL_IND (LA1) message from stack 1-XRR, and at operation 502, the at least one second stack 414 (stack2-MM) may receive an XRR_MM_CELL_IND (LA1) message from stack2-XRR. At operations 503-504, a timer T3X12 is expired, and current time is considered as 0 seconds. The current time in the present disclosure refers to time lapsed from the start of the procedure.

At operation 505, the registration is triggered and the registration request may be sent by the first stack 412 to the core network 404. In case of congestion in the network, the core network 404 may send a registration reject response to the first stack 412, as depicted at operation 506. In embodiments, the registration reject response may correspond to the registration reject message indicating the congestion in the network. In embodiments, the network 404 sends the first back-off timer duration along with the registration reject message to the first stack 412.

At operations 507-08, upon receiving the registration reject message, the first stack 412 starts the first back-off timer of the first back-off timer duration. The current time is 1 second.

At operations 509-510, timer T3X12 may have expired on at least one second stack 414. The current time is 2 seconds. At operation 511, the registration request may be sent by the at least one second stack 414 to the core network 404. In case of congestion in the network, the core network 404 may send a registration reject response to the at least one second stack 414, as depicted at operation 512. In embodiments, the registration reject response may correspond to the registration reject message indicating the congestion in the network. In embodiments, the network 404 sends the second back-off timer duration along with the registration reject message to the at least one second stack.

At operations 513-514, upon receiving the registration reject message, the at least one second stack 414 starts the second back-off timer of the second back-off timer duration. The current time is 5 minutes and 10 seconds. When the network congestion is cleared and user data or signalling is pending from network to at least one second stack 414, the at least one of the second stack 414 may receive a paging message from the network 404 indicating the clearance of the network congestion.

At operation 515, upon receiving the paging message from the network, the at least one second stack 414 may terminate the second back-off timer (e.g., before the expiration of the second back-off timer duration) and initiate network registration with the network 404. Further, in response receiving the paging message, the UE 402 responds to the network 404 via at least one second stack 414. The at least one second stack 414 sends the network registration information indicating an availability of the network to the first stack 412, as depicted at operation 516.

At operation 517, upon receiving the network registration information, the first stack 412 may terminate the first back-off timer. According to embodiments of the present disclosure, the first back-off timer may be terminated before the expiration of the first back-off timer duration.

At operations 518-519, the first stack 412 may attempt the network registration upon terminating the first back-off timer, and successfully registers with the core network 404 after receiving a registration accept message from the core network 404.

As described above, in the second challenge scenario corresponding to FIG. 2, when the UE 402 moves to a region with lower network coverage, the mobility registration fails due to lower layer failures. In such a scenario, after maximum (or upper limit) failed attempts, the current network is blocked (or limited), and a recovery timer is started in each of the stacks in a subsequent manner. In one example, lower layer failures may be, but not limited to, failures at the radio resource control or management layers or physical layers such as radio link failure, transmission failure, connection establishment failure. In one example, a duration T1 of a first recovery timer associated with the first stack may be less than a duration T2 of the second recovery timer associated with the at least one second stack such that T1<T2.

Thereafter, when the UE moves to an area with improved network coverage, and T1 expires, the UE may perform successful network registration via the first stack. According to challenge 2, despite the improved network availability, the network remains blocked (or limited) in at least one second stack due to the continued running of timer T2.

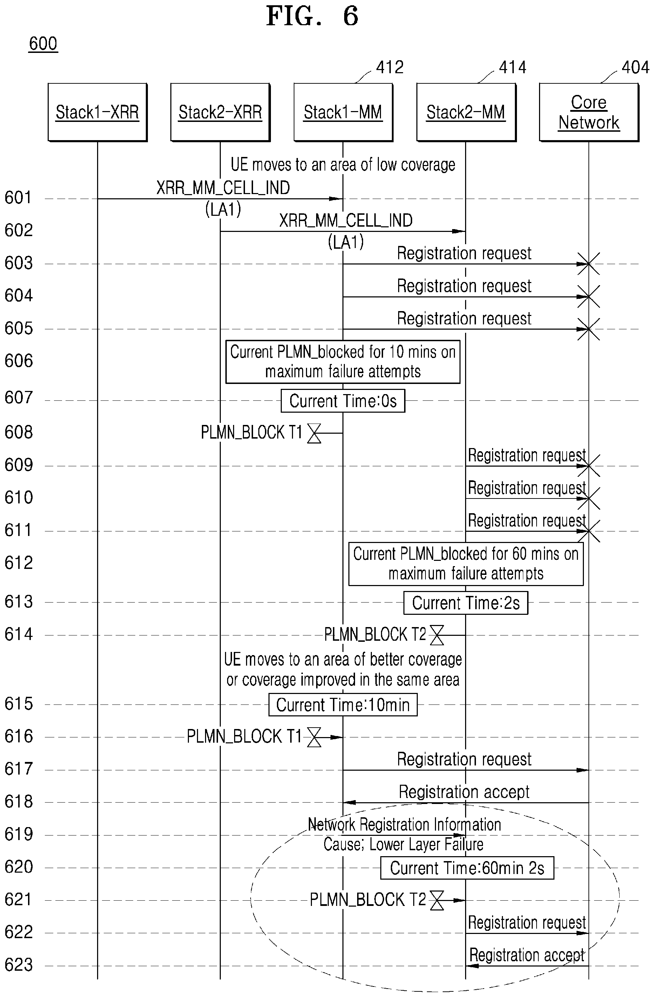

According to embodiments of the present disclosure, to address the above-described challenge scenario (hereinafter, referred to as 'solution-2'), the UE, in embodiments, may be configured to send, via the first stack 412, information indicating the availability of the network to the at least one second stack 414 such that the at least one second stack 414 terminates the second recovery timer, unblocks the current network, and attempts network registration before the expiry of the second recovery timer duration T2. The flow of operation, within the UE 402, associated with the solution-2, is described in below in conjunction with FIG. 6.

FIG. 6 illustrates a process 600 associated with the solution-2 for optimizing (or improving) the network registration, according to embodiments disclosed herein. The process 600 is implemented by the UE 402 via the first stack 412 (stack1-MM), and the at least one second stack 414 (stack2-MM) to perform optimized (or improved) network registration in the scenario when the UE moves from a lower network coverage area to an improved network coverage area. Operations 601-614 are executed when the UE moves to lower network coverage area, while the operations 615-623 are executed when the UE moves to the improved network coverage area.

Initially, an indication from the Radio Resource management layer specifying the Cell ID and related information about the cell in which the UE 402 has camped on will be sent to the Mobility Management layer (MM). At operation 601, the first stack 412 (stack1-MM) may receive XRR_MM_CELL_IND (LA1) message from stack 1-XRR, and at operation 602, the at least one second stack 414 (stack2-MM) may receive an XRR_MM_CELL_IND (LA1) message from stack2-XRR.

At operations 603-605, the first stack 412 attempts network registration with the core network 404. However, since the UE 402 is in a lower network coverage area, the attempts of the first stack 412 fail due to lower layer failures. When a predefined (or alternatively, given) number of attempts are failed, the first stack 412 starts a first timer of a first time duration. The first timer corresponds to the first recovery timer and the first time duration to the duration T1 of the first recovery timer associated with the first stack 412. In the example depicted in FIG. 6, when the attempts of the first stack 412 are failed for three times, the first timer is started.

At operations 606-608, upon starting the first timer, the network 404 is blocked (or limited) for the first stack 412 for the first time duration. In embodiments the first duration may be 10 minutes. Therefore, the core network 404 is blocked (or limited) for 10 minutes in the first stack 412. The current time is 0 seconds.

At operations 609-611, the at least one second stack 414 attempts network registration with the core network 404. However, since the UE 402 is in a lower network coverage area, the attempts of the at least one second stack 414 fail due to lower layer failures. When a predefined (or alternatively, given) number of attempts are failed, the at least one second stack 414 starts a second timer of a second time duration. The second timer corresponds to the second recovery timer and the second time duration corresponds to the duration T2 of the second recovery timer associated with the at least one second stack 414. In the example depicted in FIG. 6, when the attempts of the at least one second stack 414 are failed for three times, the second timer is started.

At operations 612-614, upon starting the second timer, the network is blocked (or limited) for the at least one second stack 414 for the second time duration. In embodiments the second duration may be 60 minutes. Therefore, the core network 404 (current PLMN) is blocked (or limited) for 60 minutes after maximum (or upper limit) number of failed attempts. At this time, the current time (time elapsed since start of procedure) may be 2 seconds.

In embodiments, after operation 614, the UE 402 may move to the improved network coverage area from the lower network coverage area, or alternatively, the coverage is improved in the same area (or a similar area) that previously had lower network coverage.

At operations 615-617, the current time (time elapsed since start of procedure) may be 10 minutes. Upon entering the improved network coverage area, and expiration of the first timer, the first stack 412 may again attempt the network registration with the core network 404 by sending a registration request. Thereafter, the first stack 412 may receive a network registration accept message, as depicted at operation 618.

According to embodiments of the present disclosure, at operation 619, the first stack 412 may send the network registration information indicating an availability of the network to the at least one second stack 414.

At operations 620-621, the current time is 10 minutes and 1 second. The at least one second stack 414, in response to receiving the network registration information indicating the availability of the network from the first stack 412, terminates the second timer (e.g., before expiration of the second timer) and unblocks the core network 404.

At operations 622-623, upon terminating the second timer and unblocking the core network 404, the at least one second stack 414 attempts the network registration by sending a registration request and successfully registers with the core network 404 upon receiving a registration accept signal from the core network 404.

As described above, in the third challenge scenario corresponding to FIGS. 3A-3C, the first stack and the at least one second stack, upon receiving the cause #17 error, retry the network registration up to a predefined (or alternatively, given) maximum (or upper limit) number of times. For example, the LAU procedure may be retried up to four times, while at least one of the GPRS attach, RAU, EPS attach, or registration update may be retried up to five times.

Consequently, the UE takes more time to start recovery from network failures. Further, since each stack performs recovery scan independently one after the other, further extending the time required (or taken) to bring the stacks back into service.

According to embodiments of the present disclosure, to address the above-described challenge scenario (hereinafter, referred to as `solution-3A'), the UE, in embodiments, may be configured to enable each stack to share information with each other whenever a network registration rejection with cause #17 is received.

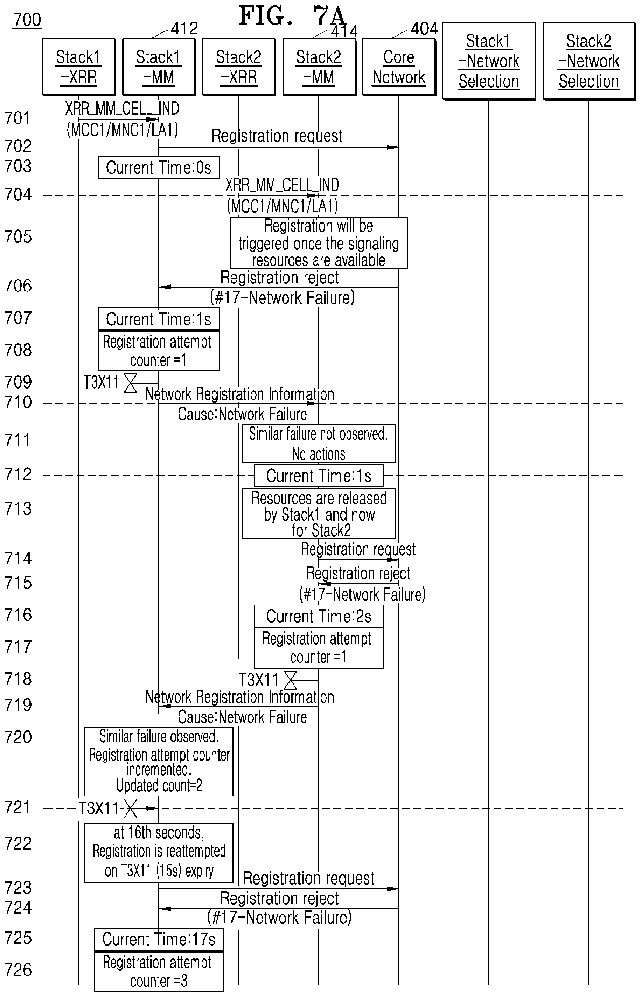

When network registration rejection information is received from peer stack, the current stack may treat the information as if said rejection is received in the current stack and increments a corresponding registration attempt counter. Said technique ensures (or improves the likelihood) that the maximum (or upper limit) number of retries are reached earlier resulting in reduction of overall recovery time from the cause #17 (Network Failure) network registration rejection. The flow of operation, within the UE 402, associated with the solution-3A, is described in below in conjunction with FIGS. 7A-7B.

FIGS. 7A-7B illustrate a process 700 for optimizing (or improving) the network registration, according to embodiments disclosed herein. The process 700 is implemented by the UE 402 via the first stack 412 (stack1-MM), and the at least one second stack 414 (stack2-MM) to perform optimized (or improved) network registration when a network registration reject message indicating a failure in the network (e.g., cause #17) is received. Each stack shares the registration information to the peer stack on receiving the registration reject messages from the network. The peer stack takes actions based on this information provided the same failure is previously noted in that stack as well.

Initially, an indication from the Radio Resource management layer specifying the Cell ID and related information about the cell in which the UE 402 has camped on will be sent to the Mobility Management layer (MM). At operation 701, the first stack 412 may receive an XRR_MM_CELL_IND (LA1) message from stack1-XRR. At operation 702, the first stack 412 may send a network registration request to the core network 404. At operation 703, the current time (time elapsed since stat of procedure) is 0 seconds and at operations 704-705, the at least one second stack 414 may receive an XRR_MM_CELL_IND (LA1) message from stack2-XRR and may trigger a network registration request once the resources are available.

At operation 706, the first stack 412 may receive a network registration reject message from the network 404. The network registration reject message, in the present scenario, may indicate a failure in the network 404, e.g., cause #17.

Upon receiving the network registration reject message indicating failure in network 404, the first stack 412, at operation 707, when current time is 1 second, the first stack 412 may update a registration attempt counter, as depicted at operation 708. For example, the registration attempt counter may be set to 1.

At operation 709, the first stack 412 may start a first retry timer of a predefined (or alternatively, given) time duration. According to embodiments disclosed herein, the first timer may correspond to the timer set for retrying a registration procedure.

At operations 710, the first stack 412 may share the Network Registration information to the at least one second stack 414. At operation 711, the at least one second stack 414 does not take any action based on the received network registration information since there were no previous rejects due to network failure observed in the at least one second stack 414 . At operation step 712-713, when the current time is 1 second, the resources are released by the first stack 412 and become available for the at least one second stack 414. At operation 714 the at least one second stack 414 attempts network registration, and at operation 715, the at least one second stack 414 receives the network registration reject message from the network 404 (network failure cause #17). At operations 716-717, when current time is 2 seconds, the at least one second stack 414 updates a registration attempt counter. For example, the registration attempt counter may be set to 1.

At operation 8, the at least one second stack 414 may start a second retry timer of the predefined (or alternatively, given) time duration. According to embodiments disclosed herein, the second timer may correspond to the timer set for retrying registration procedure.

At operation 719, the at least one second stack 414 may send the network registration information to the first stack 412 indicating a registration failure at the at least one second stack 414.

According to embodiments of the present disclosure, at operation 720, the network registration may be optimized (or improved) by incrementing, via the first stack 412, the first registration attempt counter based on the network registration information indicating the registration failure at the at least one second stack 414. For example, the first registration attempt counter may be incremented from 1 to 2 in response to the registration failure at the at least one second stack 414.

At operation 721, at the first stack 412, the first retry timer of the predefined (or alternatively, given) time duration is expired (or expires). At operations 722, the first stack 412 may take actions based on the network registration information received from the at least one second stack 414 since the same failure was noted in the first stack 412 earlier. At operation 723, the first stack 412 may attempt the network registration upon expiry of first timer. As an example, if the first timer is of 15 seconds time duration, then at the 16^{th} second, the registration is reattempted. At operation 724, the first stack 412 may receive the network registration reject message from the network 404 with cause #17.

At operations 725-726, when the current time is 17 seconds, the first stack 412 may increment the first registration attempt counter. For example, the first registration attempt counter may be incremented from 2 to 3 in response to the registration failure at the first stack 412 at operation 722. At operation 727, the first stack may restart the first timer.

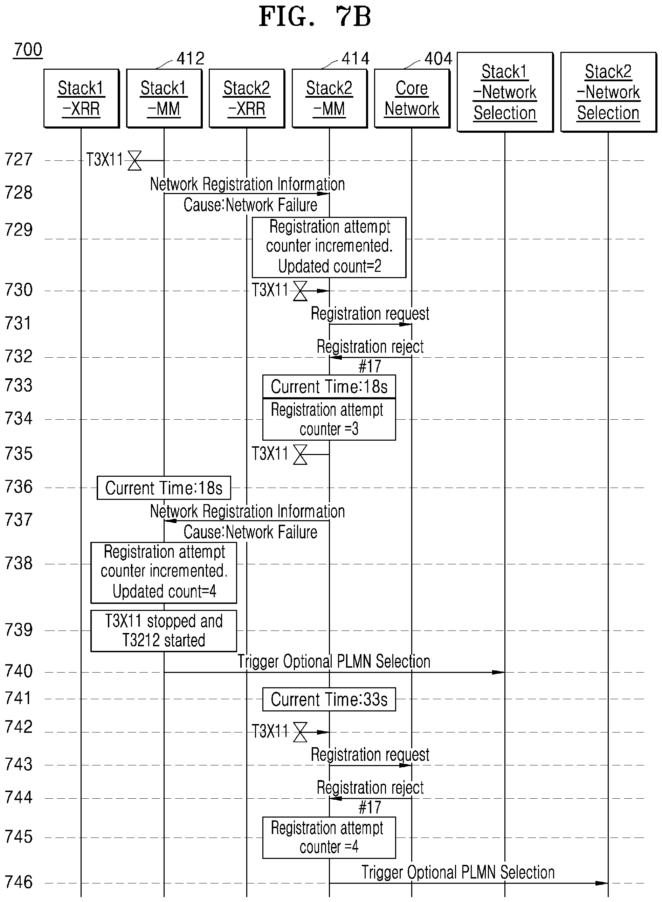

Referring to FIG. 7B, at operation 728, the first stack 412 may send to the at least one second stack 414, the network registration information indicating the registration failure at the first stack 412.

At operation 729, the at least one second stack 414 may increment the second registration attempt counter based on the network registration information indicating the registration failure at the first stack 412. For example, the second registration attempt counter may be incremented from 1 to 2 in response to the registration failure at the first stack 412.

At operation 730, the second retry timer of the predefined (or alternatively, given) time duration is expired. At operation 731, the at least one second stack 414 may attempt the network registration upon expiry of second timer. At operation 732, the at least one second stack 414 may receive the network registration reject message from the network 404 with cause #17.

At operations 733-734, when the current time is 18 seconds, the at least one second stack 414 may increment the second registration attempt counter. For example, the second registration attempt counter may be incremented to 3. At operation 735, the at least one second stack 414 may restart the second timer. At operations 736-737, when the current time is 18 seconds, the at least one second stack 414 sends the network registration information to the first stack 412 indicative the registration failure. At operation 738, the first stack 412 may increment the first registration attempt counter, for example, to 4. Therefore, the first registration attempt counter and the second registration attempt counter are incremented in response to network registration failure at each stack. In embodiments, when a registration attempt counter, e.g., either the first registration attempt counter or the second registration attempt counter, reaches a predefined (or alternatively, given) threshold, another timer T3X02 or T3X12 is started at depicted at operation 739.

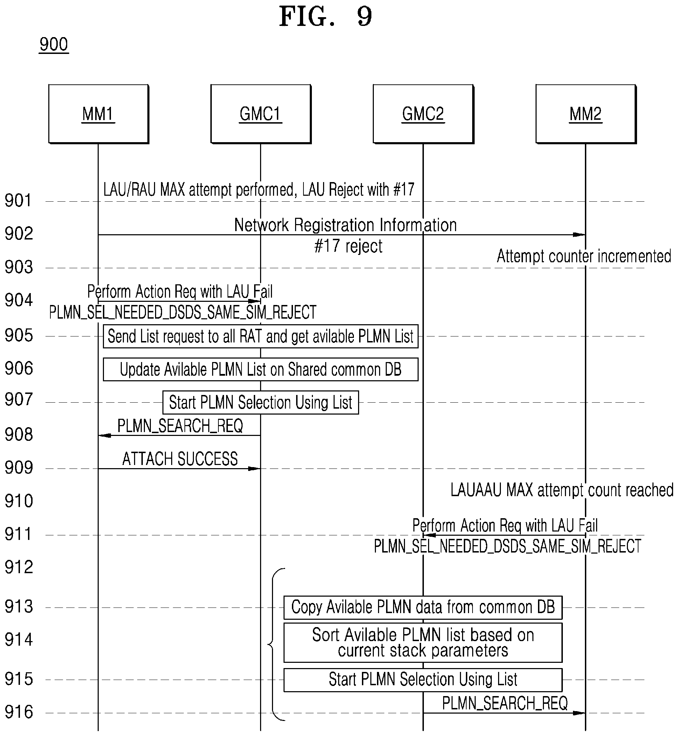

Further, at operation 740, optional PLMN selection may be triggered by the first stack 412. Further, at operations 741-746, when the current time is 33 seconds, the second retry timer may expire. The at least one second stack 414 may send a registration request to the core network 404 and receive a registration reject message with cause #17. The second registration attempt counter may be incremented to 4 and Optional PLMN selection may be triggered by the second stack 414. In embodiments, the process may include, as also depicted in FIG. 9 below, performing PLMN search after reaching maximum (or upper limit) registration attempts and sending, via the first stack 412 to the at least one second stack 414, a list of available public land mobile networks (PLMNs) which is acquired by first stack after performing PLMN search on reaching maximum (or upper limit) retry of registration for selecting the network.

In accordance with embodiments (hereinafter, referred to as `solution-3B') to address the above-described third challenge scenario, when the network registration information indicating the registration failure is received from peer stack with the same cause as (or a similar cause to) the cause of registration failure received in the current stack also, the current stack may start the retry timer and attempts registration on expiry. If the similar network registration information reject is received again from the network, then the attempt counter is incremented and shared with the peer stack such that the timer is be started and retried on expiry from the peer stack. Thus, registration attempts are made alternatively on both stacks the maximum (upper limit) count is reached. Said technique results in a reduction in the overall attempts made on each stack to perform recovery.

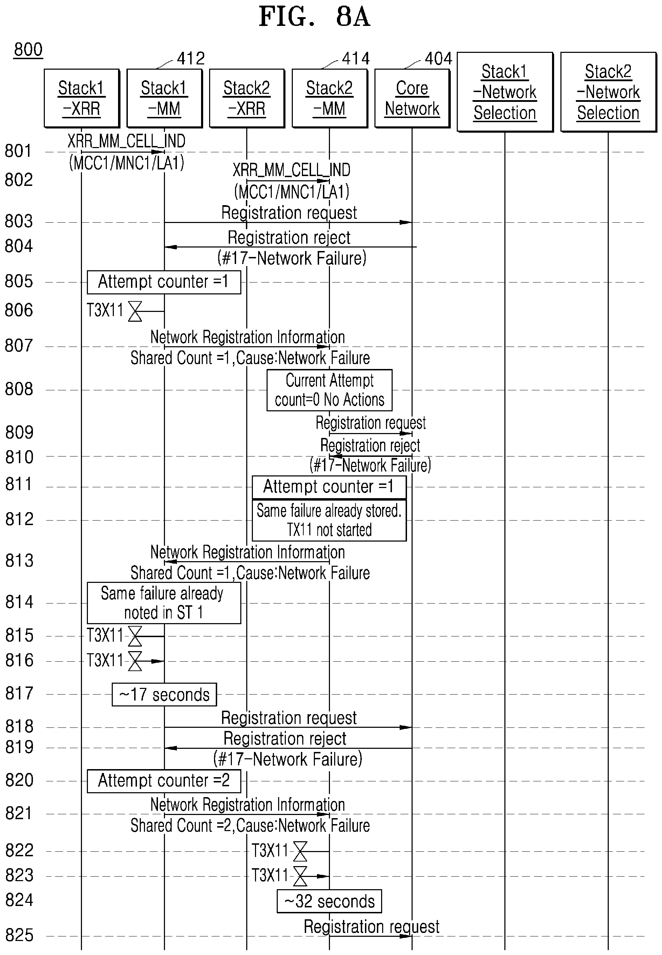

FIGS. 8A-8B illustrates a process 800 associated with the solution-3B for optimizing (or improving) the network registration, according to embodiments disclosed herein.

At operation 801, the first stack 412 (stack1-MM) may receive an XRR_MM_CELL_IND (LA1) message from (stack1-XRR), and at operation 802, the at least one second stack 414 (stack2-MM) may receive an XRR_MM_CELL_IND (LA1) message from (stack2-XRR).

At operation 803, the first stack 412 may attempt network registration with core network 404, and at operation 804, the first stack 412 may receive a network registration reject message from the network 404 indicating a registration failure at the first stack 412 due to a failure in the network 404. In embodiments, the registration reject message may indicate failure cause #17.

At operation 805, a registration attempt counter associated with the first stack 412 may be updated. For example, the attempt counter may be set to 1. At operation 806, the first stack 412 may start a timer of a predefined (or alternatively, given) time duration. In embodiments, the timer may be T3X11. At operation 807, the first stack 412 may send to the at least one second stack 414, the network registration information indicating the registration failure with reject cause specifying failure in network at the first stack 412. Thus, the registration attempt counter may be considered as a shared counter and the shared count of the registration attempt counter may be exchanged between the peer stacks (first stack 412 and at least one second stack 414). Thus, even though the first stack 412 has indicated the network failure, shared counter value is not used the at least one second stack 414 since the same failure was not noted at the at least one second stack 414.

At operation 808, a registration attempt timer associated with the at least one second stack 414 may be set to 0, and the at least one second stack 414 may attempt network registration at operation 809. At operation 810, the at least one second stack 414 may receive the network registration reject message from the network indicating a registration failure at the at least one second stack 414 due to a failure in the network. Thereafter, the first stack 412 and the at least one second stack 414 start using the shared counter value. In embodiments, the registration reject message may indicate failure cause #17.

At operation 811, upon the receipt of the network registration reject message, the registration attempt timer associated with the at least one second stack 414 may be updated from 0 to 1.

At operation 812, if the cause of network failure is same as the previously stored network failure cause, no timer is started by the at least one second stack 414. In the present case, the cause of failure is same as the previous failure cause, e.g., cause #17. Instead, at operation 813, the at least one second stack 414 may send to the first stack 412, the network registration information indicating the registration failure with reject cause specifying failure in network at the at least one second stack and information regarding the count of the registration attempt counter.

At operations 814-816, the process 800 includes restarting, via the first stack 412, the timer T3X11 and updating, via the first stack 412, the registration attempt counter based on the reception of the network registration information indicating the registration failure at the at least one second stack 414 (the same failure or a similar failure) and based on the shared registration attempt counter.

At operations 817-818, the current time (time elapsed since start of the procedure) is around 17 seconds and the first stack 412 may attempt the network registration upon expiration of the timer T3X11. Further, the first stack 412 may receive a network registration reject message from the network indicating the registration failure due to the failure (cause #17) in the network as depicted at operation 819.

At operation 820, the first stack 412 may increment the registration attempt counter (incremented to 2) based on the received count of the registration attempt counter (received at operation 813). At operation 821, the first stack 412 may send to the at least one second stack 414, the registration attempt counter information and the network registration information indicating the registration failure with reject cause specifying failure in the network at the first stack 412. Thus, the registration attempt counter may be considered as a shared counter and the shared count of the registration attempt counter may be exchanged between the peer stacks (first stack 412 and at least one second stack 414).

At operation 822, the at least one second stack 414 may restart the timer T3X11 and update the registration attempt counter based on the reception of the shared registration attempt counter and the network registration information indicating the registration failure at the first stack 412.

At operations 823-825, the at least one second stack 414 may attempt the network registration upon expiration of the timer T3X11 and send a registration request to the core network 404. The current time is around 32 seconds. At operation 826, the at least one second stack 414 may receive the network registration reject message from the network indicating a registration failure due to a failure (cause #17) in the network.

At operation 827, the at least one second stack 414 may increment the registration attempt counter (incremented to 3). At operation 828, the at least one second stack 414 may send to the first stack, the registration attempt counter information (shared count) and the network registration information indicating the registration failure with reject cause specifying failure in the network at the at least one second stack 414.

At operations 829-831, operations similar to the operations 815-817 are performed and the current time is around 47 seconds. At operation 832, the first stack 412 attempts network registration, and reaches a predetermined (or alternatively, given) threshold, as depicted at operation 833. The predetermined (or alternatively, given) threshold may be associated with the limit indicative of maximum (or upper limit) number of times the network registration could be attempted.

At operations 834-839, registration may be failed for maximum (or upper limit) number of attempts. The process 800 includes performing Optional PLMN Selection as maximum (or upper limit) registration attempts are reached on both the first stack and the at least one second stack. In particular, a registration reject message with cause #17 is received at the first stack 412. The registration attempt counter may be incremented to 4 and Optional PLMN selection may be triggered by the first stack 412. The first stack 412 sends to the at least one second stack 414, network registration information indicating that maximum (or upper limit) attempts for registration are completed. The at least one second stack 414 may stop the timer T3X11 (e.g., before expiration of the timer T3X11) and start another timer T3X02 or T3X12. The Optional PLMN selection may then be triggered by the at least one second stack 414.

Alternative to operations 834-839, the registration attempted at operation 832 may be successful. At operations 840-844, the registration accept message is received at the first stack 412. The first stack 412 may send to the at least one second stack 414, the network registration information indicating the registration success. The at least one second stack 414 may then send a registration request to the core network and receive a registration accept response from the core network 404.

FIG. 9 illustrates a process 900 for optimizing (or improving) the network registration, according to embodiments disclosed herein. The process 900 depicts communication among the first stack 412 (stack1-MM) and the at least one second stack 414 (stack2-MM), and the corresponding network (NW) selection (stack1-NW selection and stack2-NW selection). The process 900 may be associated with another solution for challenge scenario 3 described above.

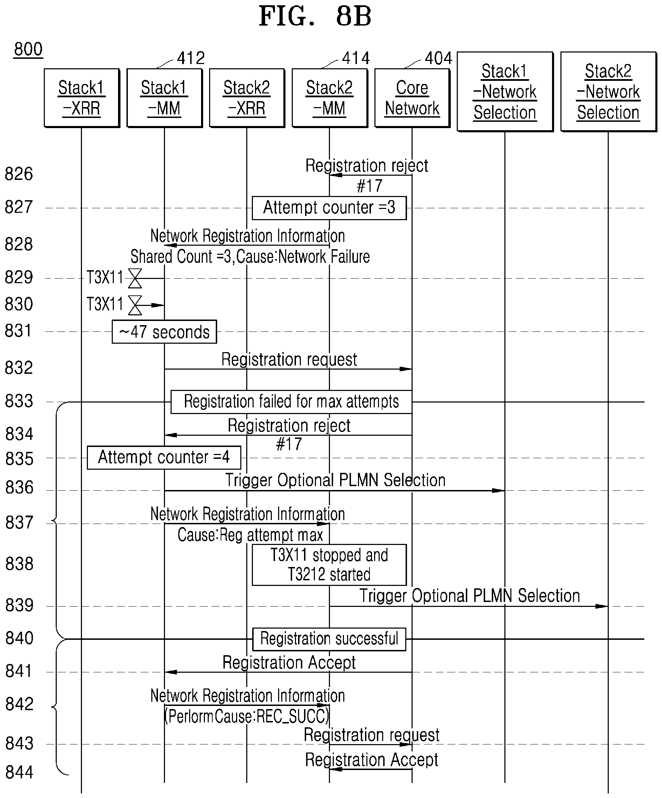

Initially, at operation 901, a Location Area Update (LAU) reject message may be received at the first stack 412. The LAU reject message may be indicative of cause #17. Further, maximum (or upper limit) LAU or Routing Area Update (RAU), EPS Attach, and Registration Update attempts may be performed. At operation 902, the first stack 402 requests the peer stack, e.g., the at least one second stack 414 to update an MM attempt counter. At operation 903, the counter of the at least one second stack can be updated to maximum after an indication from the first stack either because the counter at the first stack has reached maximum in case of shared attempt counter or the value is incremented to reach the maximum value as seen in FIGS. 7B and/or 8B. Further, at operation 904, optional PLMN selection is triggered at the first stack 412 on reaching a maximum (or upper limit) number of network registration retries resulting in registration failure.

At operation 905, the stack1-NW selection sends a list request to all Radio Access Technologies (RAT) and obtains as available PLMN list. At operation 906, the stack1-NW selection updates the available PLMN list on a shared common database. At operation 907, the stack1-NW selection starts PLMN selection using the list of available PLMNs (also referred to herein as the Available Network Selection List).

At operation 908, the stack1-NW selection may start PLMN search from Available PLMN list on the first stack 412 and at operation 909, the first stack 412 registers successfully to the stack1-NW selection.

Further, at operation 910-912, optional PLMN selection is triggered at the at least one second stack 414 on reaching maximum (or upper limit) retry of registration failure.

At operation 913, the stack2-NW selection uses the shared available PLMN data based on the list of available PLMN stored at the shared common database by first stack 412. At operation 914, the stack2-NW selection sorts the available PLMN list based on parameters of the at least one second stack 414. At operation 915, the stack2-NW selection starts PLMN selection using the list of available PLMNs. At operation 916, the stack2-NW selection may start a PLMN search on the at least one second stack 414.

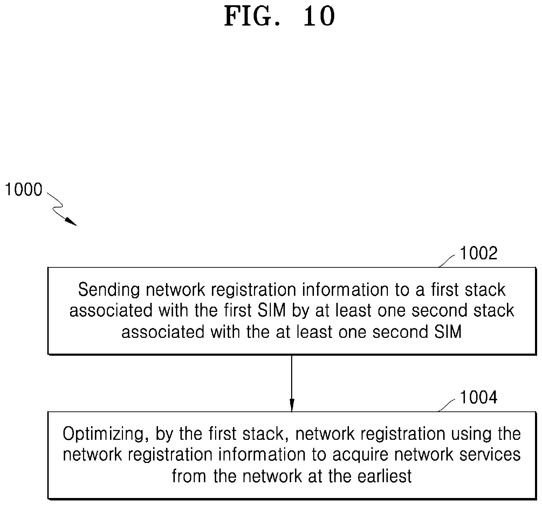

FIG. 10 illustrates a method flow chart depicting a method 1000 to optimize (or improve) network registration in a multi-sim User Equipment (UE) where a first Subscriber Identity Module (SIM) and at least one second SIM of the multi-sim UE are connected to a same network (or similar networks), in accordance with embodiments of the present disclosure. The method 1000 may be performed at the UE 402. The method 1000 may be performed by the system 416 comprising the processor 406 and the memory 410 of the UE 402.

The method shown in FIG. 10 begins at block 1002. At block 1002, the method 1000 comprises sending network registration information to a first stack associated with the first SIM by at least one second stack associated with the at least one second SIM. In embodiments, the first stack is a wireless cellular protocol software stack associated with the first SIM. In embodiments, the at least one second stack is the wireless cellular protocol software stack associated with the at least one second SIM.

At block 1004, the method 1000 comprises optimizing (or improving), by the first stack, network registration using the network registration information to acquire network services from the network at the earliest. In embodiments, the network registration information includes at least one of the registration reject information and the registration success information. Further, the registration reject information includes back-off timer information and reject cause information and may indicate a registration failure of the network at one of the first stack or the second stack. Further, the registration success information indicates that the network is available, the back-off timer information indicates a back-off timer value, and the reject cause information indicates one of a network congestion, a network failure, or a registration failure of the network at one of the first stack or the at least one second stack. According to embodiments, references to optimizing network registration contained herein may refer to adjusting, adapting, updating, etc., the network registration, for example, based on the network registration information. According to embodiments, the first stack 412 may attempt to register with the network based on the optimizing (or improving) of the network registration using the network registration information. According to embodiments, the first stack 412 may successfully register with the network based on the optimizing (or improving) of the network registration. According to embodiments, UE 402 may perform communication via the network 404 based on the successful registration by the first stack 412. For example, the UE 402 may generate a first signal (e.g., a communication signal generated using the processor 406), process the first signal to perform one or more among modulating, upconverting, filtering, amplifying and/or encrypting on the first signal, and transmit the processed first signal to an external device (e.g., a base station, another UE, etc.) via the network 404. Additionally or alternatively, the UE 402 may receive a second signal from the external device via the network 404, process the second signal to perform one or more among demodulating, downconverting, filtering, amplifying and/or decrypting on the second signal, and perform a further operation(s) based on the processed second signal. For example, the further operation(s) may include one or more of providing the processed second signal to a corresponding application executing on the UE 402, storing the processed second signal (e.g., in the memory 410, sending a response signal via the network 404, etc.

In embodiments, the method 1000 comprises receiving, by the first stack, a network registration reject message with a first back-off timer duration from the network, such that the network registration reject message indicates a congestion in the network. Further, the method comprises starting, by the first stack, a first back-off timer of the first back-off timer duration and receiving, by the at least one second stack, the network registration reject message with a second back-off timer duration from the network. Furthermore, the method 1000 comprises starting, by the at least one second stack, a second back-off timer of the second back-off timer duration, receiving, by the at least one second stack, a paging message from the network when the congestion is cleared at the network and user data or signalling pending for the at least one second stack, and finally, sending, by the at least one second stack to the first stack, the network registration information indicating an availability of the network.

In embodiments described above, the optimizing (or improving) the network registration using the network registration information comprises terminating, by the first stack, the first back-off timer when the network registration information indicates the availability of the network, and attempting the network registration upon terminating the first back-off timer.

In embodiments, the method 1000 comprises starting, by the first stack, a first timer of a first time duration when the network registration with the network failed due to lower layer failures for a predefined (or alternatively, given) number of times, wherein on starting the first timer the network is blocked (or limited) for the first stack for the first time duration. Further, the method 1000 comprises starting, by the at least one second stack, a second timer of a second time duration when the network registration with the network failed due to the lower layer failures for the predefined (or alternatively, given) number of times, wherein on starting the second timer the network is blocked (or limited) for the at least one second stack for the second time duration. Furthermore, the method comprises receiving, by the first stack, a network registration accept message when the first stack attempts the network registration after expiration of the first timer and improved network coverage conditions, and sending, by the first stack to the at least one second stack, the network registration information indicating an availability of the network.

In embodiments described above, optimizing (or improving) the network registration using the network registration information comprises terminating, by the at least one second stack, the second timer when the network registration information indicates the availability of the network, unblocking, by the second stack, the network, and attempting, by the at least one second stack, the network registration upon terminating the second timer and unblocking the network.

In embodiments, the method 1000 comprises the following operations performed by the first stack:
- receiving the network registration reject message from the network, wherein the network registration reject message indicates a failure in the network;
- updating the first registration attempt counter; and
- starting, by the first stack, a first retry timer of a predefined (or alternatively, given) time duration.

The method 1000 comprises the following operations performed by the at least one second stack:
- starting to attempt network registration;
- receiving the network registration reject message from the network;
- updating the second registration attempt counter;
- starting the second retry timer of the predefined (or alternatively, given) time duration; and
- sending to the first stack the network registration information indicating a registration failure at the at least one second stack.

In embodiments described above, the optimizing (or improving) the network registration using the network registration information comprises incrementing, by the first stack, the first registration attempt counter based on the network registration information indicating the registration failure at the at least one second stack. Upon incrementing the first registration attempt counter, the method 1000 comprises attempting, by the first stack, the network registration upon expiry of first timer, receiving the network registration reject message from the network, incrementing the first registration attempt counter, restarting the first timer, sending to the at least one second stack, the network registration information indicating the registration failure at the first stack, and incrementing, by the at least one second stack, the second registration attempt counter based on the network registration information indicating the registration failure at the first stack.

In embodiments described above, the method 1000 further comprises sending, by the first stack to the at least one second stack, a list of available public land mobile networks (PLMNs) which is acquired by first stack after performing PLMN search on reaching maximum (or upper limit) retry of registration for selecting the network.

The disclosed methods and systems enable cooperation among multiple wireless cellular protocol software stacks operating in a wireless communication device (UE). The disclosed methods and systems enable sharing Mobility Management information among the multiple stacks. All the stacks are active, and information is shared for optimization (or improvement). For example, exchanging the information includes sharing the information about NAS registration reject to peer stack so that peer stack may decide to skip attempting registration and start recovery action at earliest. Further, restricted information such as NAS level reject cause details and PLMN scanned list for faster recovery from registration failure are also shared. As a result, the present disclosure allows to reduce task duplication, reduce power consumption, accelerate information gathering, reduce service interruption, and/or improve connection stability.

Conventional devices and methods for registering a multi-SIM UE to a single network perform the same registration procedures (or similar registration procedures) for each respective stack corresponding to a SIM of the multi-SIM UE. When the multi-SIM UE experiences difficulties in registering with the network, the duplication of the registration procedures across the different stacks results in the different stacks awaiting expiration of respective timers, reaching of a maximum (or upper limit) of registration retry attempts and/or repeating PLMN search procedures. As a result, as circumstances change (e.g., when registration with the network becomes available) at least one of the stacks is unable to register with the network until expiration of a timer despite another of the stacks already having completed successful registration. Also, in scenarios in which the network is unavailable for registration and selection of a new PLMN should be performed, each stack independently performs a threshold number of registration attempts before selecting the new PLMN despite each of the registration attempts across the different stacks providing the same (or similar) information regarding the unavailability of the network. Accordingly, the conventional devices and methods result in excessive delay (e.g., service interruption) and/or resource consumption (e.g., power, processor, bandwidth, memory, etc.) with respect to one or more of the different stacks, and/or reduce connection stability.

However, according to embodiments, improved devices and methods may be provided for registering a multi-SIM UE to a single network. For example, stacks of the improved devices and methods may share network registration information, such as an indication of network registration failure, an indication of network registration success and/or a list of available PLMNs. Through this shared information, the stacks corresponding to SIMs of a multi-SIM UE may avoid (or reduce) duplication of at least some registration procedures. For example, as circumstances change (e.g., when registration with the network becomes available) at least one of the stacks may stop a timer (before expiration of the timer) in response to receiving an indication from another of the stacks regarding a network registration success, and promptly register with the network. Also, in scenarios in which the network is unavailable for registration and selection of a new PLMN should be performed, each stack may determine whether a threshold number of registration attempts has been reached based on a combination of registration attempts across the different stacks. Accordingly, the improved devices and methods may overcome the deficiencies of the conventional devices and methods to at least reduce delay (e.g., service interruption) and/or resource consumption (e.g., power, processor, bandwidth, memory, etc.) with respect to one or more of the different stacks, and/or increase connection stability.

According to embodiments, operations described herein as being performed by the communication environment 400, the UE 402, the core network 404, the processor 406, the communication unit 408, the first stack 412, the at least one second stack 414, the system 416, the Stack1-XRR, the Stack2-XRR, the Stack1-NW Selection and/or the Stack2-NW Selection may be performed by processing circuitry. The term `processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

According to embodiments, the Stack1-XRR and the Stack1-NW Selection are a part of the first stack 412 similar to Stack1-MM. Similarly, the second stack includes Stack2-MM, Stack2-XRR and Stack2-NW Selection. XRR here represents the radio resource control and management layer commonly for all the access technologies (2G, 3G, 4G, 5G). The operations performed by said layer includes establishment, maintenance, and release of connection with the network, reading broadcast system information, paging, UE measurement reporting, Radio Bearers management and security functions, etc. Network Selection (NW Selection) layer manages the PLMN selection procedures in IDLE mode. As per 3GPP TS 23.122 clause 4.4, both XRR and NW Selection layers are a part of each of the wireless cellular protocol software stacks.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 410). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments disclosed herein may be implemented through at least one software program running on at least one hardware device and performing network management functions to control the elements. The elements may be at least one of a hardware device, or a combination of hardware device and software module.

While specific language has been used to describe the disclosure, any limitations arising on account of the same are not intended. As would be apparent to a person in the art, various working modifications may be made to the method in order to implement the inventive concepts as taught herein.

The drawings and the forgoing description give examples of embodiments. Those skilled in the art will appreciate that one or more of the described elements may well be combined into a single functional element. Alternatively, certain elements may be split into multiple functional elements. Elements from one example may be added to another example. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to challenges have been described above with regard to specific examples. However, the benefits, advantages, solutions to challenges, and any component(s) that may cause any benefit, advantage, or solution to occur or become more pronounced are not to be construed as a critical, required, or essential feature or component of any or all the claims.

The foregoing description of the specific examples will so fully reveal the general nature of embodiments herein that others may, by applying current knowledge, readily modify and/or adapt for various applications such specific examples without departing from the generic concept, and, therefore, such adaptations and modifications should and are intended to be comprehended within the meaning and range of equivalents of the disclosed examples. It is to be understood that the phraseology or terminology employed herein is for the purpose of description and not of limitation. Therefore, while embodiments herein have been described in terms of at least one examples, those skilled in the art will recognize that the examples herein may be practiced with modification within the scope of embodiments as described herein.

## Claims

1. A method for network registration implemented in a multi-Subscriber Identity Module (SIM) User Equipment (UE), the multi-SIM UE including a first SIM and at least one second SIM, the first SIM and the at least one second SIM being connected to a common network, and the method comprising:
sending network registration information to a first stack associated with the first SIM by at least one second stack associated with the at least one second SIM; and
adapting, by the first stack, a network registration using the network registration information.

2. The method as claimed in claim 1, wherein:
the first stack is a wireless cellular protocol software stack; and
the at least one second stack is at least one wireless cellular protocol software stack.

3. The method as claimed in claim 1 or claim 2, wherein:
the network registration information includes at least one of registration reject information, an available network selection list, or registration success information;
if the network registration information includes registration reject information, the registration reject information includes back-off timer information and reject cause information, the back-off timer information indicating a back-off timer value, and the reject cause information indicating one of a network congestion, a network failure, or a registration failure of the network at one of the first stack or the at least one second stack;
if the network registration information includes registration success information, the registration success information indicates that the network is available; and
if the network registration information includes an available network selection list, the available network selection list indicates a list of available Public Land Mobile Networks (PLMNs) acquired by at least one of the first stack or the at least one second stack as part of Optional PLMN selection performed based on reaching a maximum number of registration retries.

4. The method as claimed in any preceding claim, further comprising:
receiving, by the first stack, a first network registration reject message with a first back-off timer duration from the network, the first network registration reject message indicating congestion in the network;
starting, by the first stack, a first back-off timer of the first back-off timer duration;
receiving, by the at least one second stack, a second network registration reject message with a second back-off timer duration from the network,
starting, by the at least one second stack, a second back-off timer of the second back-off timer duration;
receiving, by the at least one second stack, a paging message from the network based on the congestion being cleared at the network; and
sending, by the at least one second stack to the first stack, an indication of an availability of the network as the network registration information.

5. The method as claimed in claim 4, wherein the adapting the network registration comprises:
terminating, by the first stack, the first back-off timer in response to receiving the network registration information; and
attempting the network registration based on the terminating of the first back-off timer.

6. The method as claimed in any of claims 1 to 3, further comprising:
starting, by the first stack, a first timer of a first time duration in response to failure in registration with the network due to lower layer failures occurring a first number of times, the network being blocked for registration by the first stack for the first time duration based on the starting of the first timer;
starting, by the at least one second stack, a second timer of a second time duration in response to failure in registration with the network due to the lower layer failures occurring the first number of times, the network being blocked for registration by the at least one second stack for the second time duration based on the starting of the second timer;
receiving, by the at least one second stack, a network registration accept message in response to an attempt by the at least one second stack to register to the network, the attempt by the at least one second stack to register to the network being based on expiration of the second timer; and
sending, by the at least one second stack to the first stack, an indication of an availability of the network as the network registration information.

7. The method as claimed in claim 6, wherein the adapting the network registration comprises:
terminating, by the first stack, the first timer in response to receiving the network registration information; and
attempting, by the first stack, the network registration based on the terminating of the first timer.

8. The method as claimed in any of claims 1 to 3, further comprising:
receiving, by the first stack, a first network registration reject message from the network, the first network registration reject message indicating a failure in the network;
incrementing, by the first stack, a first registration attempt counter based on the first network registration reject message;
starting, by the first stack, a first retry timer of a first time duration;
attempting, by the at least one second stack, to register to the network;
receiving, by the at least one second stack, a second network registration reject message from the network, the second network registration reject message indicating the failure in the network;
incrementing, by the at least one second stack, a second registration attempt counter based on the second network registration reject message;
starting, by the at least one second stack, a second retry timer of the first time duration; and
sending, by the at least one second stack to the first stack, an indication of a registration failure at the at least one second stack as the network registration information.

9. The method as claimed in claim 8, wherein the adapting the network registration comprises:
incrementing, by the first stack, the first registration attempt counter based on the network registration information.

10. The method as claimed in claim 9, further comprising:
attempting, by the first stack, to register to the network based on expiration of the first retry timer;
receiving, by the first stack, a third network registration reject message from the network;
incrementing, by the first stack, the first registration attempt counter based on the third network registration reject message;
restarting, by the first stack, the first retry timer;
sending, by the first stack to the at least one second stack, an indication of a registration failure at the first stack; and
incrementing, by the at least one second stack, the second registration attempt counter based on the indication of the registration failure at the first stack.

11. The method as claimed in claim 10, further comprising:
sending, by the first stack to the at least one second stack, a list of available public land mobile networks (PLMNs) acquired by the first stack based on performing a PLMN search, the PLMN search being performed based on reaching a maximum number of retries attempting to register with the network.

12. The method as claimed in any of claims 1 to 3, further comprising:
receiving, by the first stack, a first network registration reject message from the network, the first network registration reject message indicating a first registration failure at the first stack due to a failure in the network;
starting, by the first stack, a first timer of a first time duration;
sending, by the first stack to the at least one second stack, an indication of the first registration failure due to the failure in the network; and
receiving, by the first stack from the at least one second stack, an indication of a second registration failure at the second stack due to the failure in network.

13. The method as claimed in claim 12, wherein the adapting the network registration comprises:
restarting, by the first stack, the first timer in response to receiving the network registration information;
updating, by the first stack, a first registration attempt counter based on a shared count included in the network registration information;
attempting, by the first stack, to register with the network based on expiration of the first timer;
receiving, by the first stack, a second network registration reject message from the network indicating a third registration failure due to the failure in the network;
incrementing, by the first stack, the first registration attempt counter based on the second network registration reject message; and
sending, by the first stack to the at least one second stack, the first registration attempt counter and an indication of the third registration failure due to the failure in the network.

14. The method as claimed in claim 13, further comprising:
restarting, by the at least one second stack, a second timer in response to receiving the first registration attempt counter and the indication of the third registration failure;
updating, by the at least one second stack, a second registration attempt counter based on the shared count, the shared count being based on the first registration attempt counter;
attempting, by the at least one second stack, to register with the network registration based on expiration of the second timer;
receiving, by the at least one second stack, a third network registration reject message from the network indicating a fourth registration failure due to the failure in the network;
incrementing, by the at least one second stack, the second registration attempt counter; and
sending, by the at least one second stack to the first stack, the second registration attempt counter and an indication of the fourth registration failure due to the failure in the network.

15. A multi-Subscriber Identity Module (SIM) User Equipment (UE), comprising:
a first stack associated with a first SIM;
at least one second stack associated with at least one second SIM; and
processing circuitry configured to control the first stack and the at least one second stack to:
send, using the at least one second stack, network registration information to the first stack, the first SIM and the at least one second SIM being connected to a common network, and
adapt, using the first stack, a network registration using the network registration information.

## Amended claims

### Amended claims in accordance with Rule 137(2) EPC.

1. A method for network registration implemented in a multi-Subscriber Identity Module SIM User Equipment UE (402), the multi-SIM UE (402) including a first SIM and at least one second SIM, the first SIM and the at least one second SIM being connected to a common network (404), and the method comprising:
sending network registration information to a first stack (412, stack 1-MM) associated with the first SIM by at least one second stack (414, stack 2-MM) associated with the at least one second SIM; and
adapting, by the first stack (412, stack 1-MM), a network registration using the network registration information,
wherein the network registration information comprises registration reject information.

2. The method as claimed in claim 1, wherein:
the first stack (412, stack 1-MM) is a wireless cellular protocol software stack; and
the at least one second stack (414, stack 2-MM) is at least one wireless cellular protocol software stack.

3. The method as claimed in claim 1 or claim 2, wherein:
the network registration information further includes at least one of, an available network selection list, or registration success information;
wherein if the network registration information includes registration reject information, the registration reject information includes back-off timer information and reject cause information, the back-off timer information indicating a back-off timer value, and the reject cause information indicating one of a network congestion, a network failure, or a registration failure of the network at one of the first stack (412, stack 1-MM) or the at least one second stack (414, stack 2-MM);
if the network registration information includes registration success information, the registration success information indicates that the network (404) is available; and
if the network registration information includes an available network selection list, the available network selection list indicates a list of available Public Land Mobile Networks PLMNs acquired by at least one of the first stack (412, stack 1-MM) or the at least one second stack (414, stack 2-MM) as part of Optional PLMN selection performed based on reaching a maximum number of registration retries.

4. The method as claimed in any preceding claim, comprising:
receiving, by the first stack (412, stack 1-MM), a first network registration reject message with a first back-off timer duration from the network (404), the first network registration reject message indicating congestion in the network (404);
starting, by the first stack (412, stack 1-MM), a first back-off timer of the first back-off timer duration;
receiving, by the at least one second stack (414, stack 2-MM), a second network registration reject message with a second back-off timer duration from the network (404),
starting, by the at least one second stack (414, stack 2-MM), a second back-off timer of the second back-off timer duration;
receiving, by the at least one second stack (414, stack 2-MM), a paging message from the network based on the congestion being cleared at the network (404); and
wherein the sending network registration information to the first stack (412, stack 1-MM) by the at least one second stack (414, stack 2-MM) occurs after the at least one second stack receives the paging message from the network (404) and comprises sending an indication of an availability of the network (404).
wherein the adapting the network registration comprises:
terminating, by the first stack (412, stack 1-MM), the first back-off timer in response to receiving the network registration information; and
attempting the network registration based on the terminating of the first back-off timer.

5. The method as claimed in any of claims 1 to 3, comprising:
starting, by the first stack (412, stack 1-MM), a first timer of a first time duration in response to failure in registration with the network (404) due to lower layer failures occurring a first number of times, the network (404) being blocked for registration by the first stack (412, stack 1-MM) for the first time duration based on the starting of the first timer;
starting, by the at least one second stack (414, stack 2-MM), a second timer of a second time duration in response to failure in registration with the network (404) due to the lower layer failures occurring the first number of times, the network (404) being blocked for registration by the at least one second stack for the second time duration based on the starting of the second timer;
receiving, by the at least one second stack (414, stack 2-MM), a network registration accept message in response to an attempt by the at least one second stack (414, stack 2-MM) to register to the network (404), the attempt by the at least one second stack (414, stack 2-MM) to register to the network (404) being based on expiration of the second timer; and
wherein the sending network registration information to the first stack (412, stack 1-MM) by the at least one second stack (414, stack 2-MM) occurs after the at least one second stack receives the network registration accept message, and further comprises sending an indication of an availability of the network. wherein the adapting the network registration comprises:
terminating, by the first stack (412, stack 1-MM), the first timer in response to receiving the network registration information; and
attempting, by the first stack (414, stack 2-MM), the network registration based on the terminating of the first timer.

6. The method as claimed in any of claims 1 to 3, further comprising:
receiving, by the first stack (412, stack 1-MM), a first network registration reject message from the network (404), the first network registration reject message indicating a failure in the network (404);
incrementing, by the first stack (412, stack 1-MM), a first registration attempt counter based on the first network registration reject message;
starting, by the first stack (412, stack 1-MM), a first retry timer of a first time duration;
attempting, by the at least one second stack (414, stack 2-MM), to register to the network (404);
receiving, by the at least one second stack (414, stack 2-MM), a second network registration reject message from the network, the second network registration reject message indicating the failure in the network (404);
incrementing, by the at least one second stack (414, stack 2-MM), a second registration attempt counter based on the second network registration reject message;
starting, by the at least one second stack (414, stack 2-MM), a second retry timer of the first time duration; and
sending, by the at least one second stack (414, stack 2-MM) to the first stack (412, stack 1-MM), an indication of a registration failure at the at least one second stack (414, stack 2-MM) as the network registration information.

7. The method as claimed in claim 6, wherein the adapting the network registration comprises:
incrementing, by the first stack (412, stack 1-MM), the first registration attempt counter based on the network registration information.

8. The method as claimed in claim 7, further comprising:
attempting, by the first stack (412, stack 1-MM), to register to the network (404) based on expiration of the first retry timer;
receiving, by the first stack (412, stack 1-MM), a third network registration reject message from the network (404);
incrementing, by the first stack (412, stack 1-MM), the first registration attempt counter based on the third network registration reject message;
restarting, by the first stack (412, stack 1-MM), the first retry timer;
sending, by the first stack (412, stack 1-MM) to the at least one second stack (414, stack 2-MM), an indication of a registration failure at the first stack (412, stack 1-MM); and
incrementing, by the at least one second stack (414, stack 2-MM), the second registration attempt counter based on the indication of the registration failure at the first stack (412, stack 1-MM).

9. The method as claimed in claim 8, further comprising:
sending, by the first stack (412, stack 1-MM) to the at least one second stack (414, stack 2-MM), a list of available public land mobile networks PLMNs acquired by the first stack (412, stack 1-MM) based on performing a PLMN search, the PLMN search being performed based on reaching a maximum number of retries attempting to register with the network (404).

10. The method as claimed in any of claims 1 to 3, further comprising:
receiving, by the first stack (412, stack 1-MM), a first network registration reject message from the network (404), the first network registration reject message indicating a first registration failure at the first stack (412, stack 1-MM) due to a failure in the network (404);
starting, by the first stack (412, stack 1-MM), a first timer of a first time duration;
sending, by the first stack (412, stack 1-MM) to the at least one second stack (414, stack 2-MM), an indication of the first registration failure due to the failure in the network (404); and
receiving, by the first stack (412, stack 1-MM) from the at least one second stack (414, stack 2-MM), an indication of a second registration failure at the second stack (414, stack 2-MM) due to the failure in network (404).

11. The method as claimed in claim 10, wherein the adapting the network registration comprises:
restarting, by the first stack (412, stack 1-MM), the first timer in response to receiving the network registration information;
updating, by the first stack (412, stack 1-MM), a first registration attempt counter based on a shared count included in the network registration information;
attempting, by the first stack (412, stack 1-MM), to register with the network (404) based on expiration of the first timer;
receiving, by the first stack (412, stack 1-MM), a second network registration reject message from the network (404) indicating a third registration failure due to the failure in the network (404);
incrementing, by the first stack (412, stack 1-MM), the first registration attempt counter based on the second network registration reject message; and
sending, by the first stack (412, stack 1-MM) to the at least one second stack (414, stack 2-MM), the first registration attempt counter and an indication of the third registration failure due to the failure in the network (404).

12. The method as claimed in claim 11, further comprising:
restarting, by the at least one second stack (414, stack 2-MM), a second timer in response to receiving the first registration attempt counter and the indication of the third registration failure;
updating, by the at least one second stack (414, stack 2-MM), a second registration attempt counter based on the shared count, the shared count being based on the first registration attempt counter;
attempting, by the at least one second stack (414, stack 2-MM), to register with the network registration based on expiration of the second timer;
receiving, by the at least one second stack (414, stack 2-MM), a third network registration reject message from the network indicating a fourth registration failure due to the failure in the network (404);
incrementing, by the at least one second stack (414, stack 2-MM), the second registration attempt counter; and
sending, by the at least one second stack (414, stack 2-MM) to the first stack (412, stack 1-MM), the second registration attempt counter and an indication of the fourth registration failure due to the failure in the network (404).

13. A multi-Subscriber Identity Module SIM User Equipment UE, comprising:
a first stack (412, stack 1-MM) associated with a first SIM;
at least one second stack (414, stack 2-MM) associated with at least one second SIM; and
processing circuitry configured to control the first stack (412, stack 1-MM) and the at least one second stack (414, stack 2-MM) to:
send, using the at least one second stack (414, stack 2-MM), network registration information to the first stack (412, stack 1-MM), the first SIM and the at least one second SIM being connected to a common network (404), and
adapt, using the first stack (412, stack 1-MM), a network registration using the network registration information,
wherein the network registration information comprises registration reject information.
